# EUROPEAN PATENT SPECIFICATION

(11) **EP 0 919 584 B1**
(45) Date of publication and mention of the grant of the patent: **12.02.2003**
(21) Application number: 97309512.8
(22) Date of filing: 26.11.1997
(51) Int. Cl.: C08J 3/12, C08G 77/34

(54) **Cured silicone powder and method of preparation**
Gehärteter Siliconpulver und Verfahren zur Herstellung
Poudre de silicone durci et procédé de fabrication

(43) Date of publication of application: 02.06.1999
(73) Proprietor: Dow Corning Toray Silicone Company, Ltd., Tokyo, 100 (JP)
(72) Inventor: Hamachi, Tadashi, Ichihara-shi, Chiba Prefecture (JP); Kobayashi, Kazuo, Ichihara-shi, Chiba Prefecture (JP); Morita, Yoshitsugu, Ichihara-shi, Chiba Prefecture (JP); Sawa, Kiyotaka, Ichihara-shi, Chiba Prefecture (JP); Tachibana, Ryuji, Ichihara-shi, Chiba Prefecture (JP)
(74) Representative: Kyle, Diana

(56) References cited:
- EP-A- 0 350 519
- EP-A- 0 826 721
- PATENT ABSTRACTS OF JAPAN vol. 018, no. 198 (C-1187), 7 April 1994 & JP 06 001709 A (KAO CORP), 11 January 1994,

## Description

This invention is directed to cured silicone powders, and methods for their preparation. More particularly, the invention relates to a cured silicone powder inhibited from evolving unpleasant odors with the passage of time, and to an efficient method for producing the cured silicone powder.

The preparation of cured silicone powder by curing and then drying, or by simultaneously curing and drying, a curable silicone composition dispersed in aqueous surfactant solution, is known (i.e., Japanese Patent Application Laid Open [Kokai or Unexamined] Numbers Sho 62-257939 [257,939/1987]; Sho 64-56735 [56,735/1989]; Sho 64-70558 [70,558/1989]; and Hei 4-168117 [168,117/1992]).

However, the problem with these cured silicone powders is that they evolve an unpleasant odor with the passage of time, due to phenomena such as oxidation of surface organic groups, and oxidation of components present in the cured material.

An object of the present invention is to provide a cured silicone powder that is inhibited from evolving unpleasant odors with the passage of time. Another object of the present invention is to provide an efficient method for preparation of the cured silicone powder.

These and other objects of the invention will become apparent from a consideration of the detailed description.

The cured silicone powder according to the present invention is characterized in that its surface has been treated with an alkali. The method for preparation of the cured silicone powder is characterized by treating the cured silicone powder by dipping it in an aqueous alkaline solution. Thus, the characteristic feature of the cured silicone powder according to the present invention is that its surface has been treated with an alkali.

The cured silicone powder may be in the form of a gel, a rubber, or a hard resin. Its shape may be spherical, flat, disk-like, or irregular. The cured silicone powder has a particle size exemplified by a number-average particle diameter in the range from 0.1 to 200 µm.

The alkali used to treat the surface of the cured silicone powder is exemplified by alkali metal and alkaline-earth metal hydroxides such as sodium hydroxide, potassium hydroxide, and calcium hydroxide; alkali metal and alkaline-earth metal salts of inorganic acids such as sodium carbonate, sodium bicarbonace, potassium carbonate, potassium bicarbonate, sodium phosphate, and potassium phosphate; ammonia; alkali metal and alkaline-earth metal salts of carboxylic acids such as sodium acetate, potassium acetate, and sodium citrate; amine compounds such as trimethylamine, triethylamine, butylamine, and aniline; nitrogenous heterocyclic compounds such as pyridine and pyrrolidine; and mixtures of two or more alkalis such as alkali metal and alkaline-earth metal hydroxides, and alkali metal and alkaline-earth metal carboxylates. Alkali metal and alkaline-earth metal hydroxides and alkali metal carboxylates are preferred because of their good efficiency in alkali treatment. The alkali may be used for treatment as an aqueous solution or an organic solvent solution, but treatment with an aqueous solution is preferred.

We found that timewise evolution of unpleasant odor is due to groups and compounds produced by oxidation, induced by heat or UV radiation, of organic groups present on the surface of prior art cured silicone powders, as well as oxidation of components present in the cured silicone powders.

In contrast, however, the cured silicone powder according to our invention is restrained from evolving unpleasant odor with time, as a result of the chemical reaction (i.e., neutralization, decomposition) of such groups and compounds, when the surface of the cured material is treated with an alkali.

Groups and compounds which are the source of unpleasant odors are aldehyde and carboxyl groups; and aldehyde, ketone, and carboxylic acid compounds generated by oxidation of organic groups such as the alkyl and alkenyl groups bonded to the organopolysiloxana making up the cured silicone powder. Other examples or sources or unpleasant odors are aldehyde, ketone, and carboxylic acid compounds generated by oxidation of components such as surfactants present in the cured silicone powder.

While timewise generation of unpleasant odors by cured silicone powder according to the present invention is inhibited simply by an alkali treatment of its surface, an additional enhancement in inhibition of cured silicone powders can be obtained by treating the cured silicone powder with an alkali until the cured silicone powder gives a hydrogen ion exponent (pH) in aqueous ethanol solution of 6 to 8. The method for measuring this hydrogen ion exponent (pH) is carried out by using 10 weight parts of cured silicone powder dispersed in an aqueous ethanol solution (25 °C) which is prepared from 10 weight parts echanol and 80 weight parts pure water. The measurement is made using a pH meter.

The subject preparative method is characterized by treating cured silicone powder by dipping it in an aqueous alkaline solution. The technique for preparing the starting cured silicone powder is not critical, however. In a preferred method for preparing the starting cured silicone powder, a curable silicone composition is dispersed in an aqueous surfactant solution and cured, and then it is dried. Alternatively, the curable silicone composition is dispersed in an aqueous surfactant solution and simultaneously cured and dried, as by spraying the waterborne dispersion into a hot gas current. Curable silicone compositions are exemplified by addition reaction-curing silicone compositions; dehydrogenative condensation reaction-curing silicone compositions; alcohol-eliminating condensation reaction-curing silicone compositions; and dehydration condensation reaction-curing silicone compositions. In each case, the silicone compositions cure into a gel, a rubber, or a hard resin.

The surfactant is exemplified by cationic surfactants such as primary, secondary, and tertiary aliphatic amine salts, alkyltrimethyl ammonium salts, dialkyldimethyl ammonium salts, tetraalkyl ammonium salts, trialkylbenzyl ammonium salts, alkyl pyridinium salts, N,N'-dialkyl morpholinium salts, and polyethylene polyamine fatty acid amide salts.

The surfactant is also exemplified by anionic surfactants such as fatty acid salts, alkylbenzene sulfonates, alkylnaphthalene sulfonates, alkyl sulfonates, α-olefin sulfonates, dialkyl sulfosuccinates, α-sulfonated fatty acid salts, N-acyl-N-methyl taurate, alkyl sulfuric acid salts, sulfated fats and oils, polyoxyethylene alkyl ether sulfate salts, polyoxyethylene alkylphenyl ether sulfate salts, polyoxyethylene styrenated phenyl ether sulfate salts, alkyl phosphate salts, polyoxyethylene alkyl ether phosphate salts, polyoxyethylene alkylphenyl ether phosphate salts, and naphthalene sulfonate/formaldehyde condensates.

The surfactant is further exemplified by nonionic surfactants such as polyoxyethylene alkyl ethers; polyoxyethylene alkenyl ethers; polyoxyethylene alkylphenyl ethers; polyoxyethylene polystyryl phenyl ethers; polyoxyechylene-polyoxypropylene glycols; polyoxyethylene-polyoxypropylene alkyl ethers; polyhydric alcohol/fatty acid partial esters such as sorbitan fatty acid esters, glycerol fatty acid esters, decaglycerol fatty acid esters, polyglycerol fatty acid esters, and propylene glycol-pentaerythritol fatty acid esters; polyoxyethylene polyhydric alcohol/fatty acid partial esters such as polyoxyethylene sorbitan/fatty acid esters and polyoxyethylene glycerol fatty acid esters; polyoxyethylene/fatty acid esters; polyglycerol/fatty acid esters; polyoxyethylated castor oil; fatty acid diethanolamides; polyoxyethylene alkylamines; triethanolamine/fatty acid partial esters; trialkylamine oxides; and polyoxyethylene-functional organopolysiloxanes.

Mixtures of two or more of such surfactants can also be used. The method according to our invention is most effective using nonionic surfactants, which themselves can be strong generators of unpleasant odor with elapsed time, and is particularly effective using polyoxyethylene chain-containing nonionic surfactants.

The curable silicone composition can be dispersed in the aqueous surfactant solution using a stirring device such as a homogenizer, homomixer, colloid mill, or blade-type stirrer. The cured silicone powder can be obtained by first dispersing the curable silicone composition in the aqueous surfactant solution using the stirring device, and then curing the composition. The cure can be effected by allowing the composition to stand at room temperature or by heating the composition. Cure can also be effected during drying of the aqueous surfactant solution of the curable silicone composition. Examples of some techniques for efficiently drying the cured silicone powder include drying in a heated reduced-pressure dryer, and drying in a hot-gas dryer such as a forced convection oven or a spray dryer. Drying includes heating, and drying atmospheres are exemplified by air, nitrogen, argon, helium, and carbon dioxide.

The method according to the present invention is characterized by treating prior-art cured silicone powder by dipping the cured silicone powder in an aqueous alkaline solution. The aqueous alkaline solution can be an aqueous solution of an alkali described above.

A water-soluble organic solvent such as methanol, ethanol, and acetone, can also be used for effecting dispersion of the cured silicone powder in the aqueous solution. The amount of aqueous alkaline solution used for treatment is not critical, but the amount of alkali in the aqueous solution is preferably greater than 5 weight-ppm with reference to the cured silicone powder. The concentration of the aqueous alkaline solution is also not critical. higher concentrations provide greater effects, and can provide shorter treatment times, but higher concentrations also require more post-treatment time to remove excess alkali. Thus, the concentration must be selected as appropriate to particular circumstances.

The treatment temperature is preferably in the range of from 0 °C to 90 °C. Higher temperatures provide greater effects and can provide shorter treatment times, but higher temperatures also risk scission of siloxane bonds in organopolysiloxanes making up the cured silicone powder. Thus, the temperature must also be selected as appropriate to particular circumstances.

The treatment time will vary with concentration of aqueous alkaline solution and with treatment temperature. However, dipping is continued until the hydrogen ion exponent (pH) of the aqueous ethanol solution is 6 to 8 when the cured silicone powder is dispersed in an aqueous ethanol solution after the alkali treatment. After dipping, the cured silicone powder is washed with water to remove excess alkali.

The following examples are set forth to illustrate the cured silicone powder according to the present invention and its method of preparation. The unpleasant odor determination, and the measurement of hydrogen ion exponent (pH) in aqueous ethanol were carried out as follows.

### Determination of Unpleasant Odor from the Cured Silicone Powder

10 weight parts of cured silicone powder, 10 weight parts ethanol, and 20 weight parts pure water with conductivity of 0.2 µS/cm where S is siemens, were stirred for 2 minutes at 3,000 rpm using a homodisperser, and were then sealed in a 300-mL stopper-equipped glass bottle. The bottle was kept in an oven at 50 °C for 1 week. After the glass bottle had cooled to room temperature (25 °C), the presence/absence of unpleasant odor was evaluated by a 10-person panel on the following scale:
x = 8 or more panelists detected an unpleasant odor other than ethanol.
+ = from 3 to 7 panelists detected an unpleasant odor other than ethanol.
+ + = 2 or fewer panelists detected an unpleasant odor other than ethanol.

### Determination of the Hydrogen Ion Exponent (pH) of the Cured Silicone Powder in Aqueous Ethanol

10 weight parts of the cured silicone powder, 10 weight parts ethanol, and 80 weight parts pure water (conductivity = 0.2 µS/cm), were stirred in a homodisperser for 2 minutes at 3,000 rpm, and the hydrogen ion exponent (pH) of the aqueous ethanol solution was measured at 25 °C using a Model F-24 Horiba Limited pH meter. The reported pH value is the value measured after the pH value had stabilized after the start of its measurement.

### Comparative Example 1

An addition reaction-curing silicone rubber composition having a viscosity of 400 centipoise at 25 °C, was mixed to homogeneity at 5 °C. The cure of this composition yields a silicone rubber with a JIS A hardness of 37 and a specific gravity of 0.98. The composition was then rapidly mixed with 200 weight parts of pure water (conductivity = 0.2 µS/cm) at 25 °C, and 4 weight parts polyoxyethylene nonylphenyl ether
(HLB = 13.1), and this mixture was passed through a homogenizer (300 kgf/cm²) to yield a homogeneous waterborne emulsion of the silicone rubber composition. This waterborne emulsion of the silicone rubber composition was held at 30 °C for 6 hours to provide a waterborne dispersion of silicone rubber powder. The waterborne dispersion of silicone rubber powder was heated for 1 hour at 80°C, and the water was then removed using a spray dryer at a discharge rate of 3 L/hour and an air temperature of 300°C. This procedure yielded a silicone rubber powder (A) with a number-average particle diameter of 4 µm. Silicone rubber powder (A) was evaluated for unpleasant odor generation and its hydrogen ion exponent (pH). The results are reported in Table 1.

### Comparative Example 2

10 weight parts of silicone rubber powder (A) prepared in Comparative Example 1 was stirred at room temperature for 1 hour at 3,000 rpm in a homodisperser, with 100 weight parts pure water (conductivity = 0.2 µS/cm), followed by standing for 1.5 hours. The silicone rubber powder was then filtered off on filter paper. A slurry of the filtered silicone rubber powder, and 100 weight parts pure water (conductivity = 0.2 µS/cm), was again stirred for 1 hour in the homodisperser, and then allowed to stand for 1.5 hours. Filtration of the silicone rubber powder and washing with pure water was subsequently carried out twice, yielding a slurry of the silicone rubber powder. The slurry of the silicone rubber powder was dried in an oven at 100 °C to provide silicone rubber powder (B). Silicone rubber powder (B) was evaluated for unpleasant odor generation and its hydrogen ion exponent (pH). The results are reported in Table 1.

### Example 1

10 weight parts of silicone rubber powder (A) prepared in Comparative Example 1 was stirred at room temperature for 1 hour at 3,000 rpm in a homodisperser, with a mixed solution of 100 weight parts pure water (conductivity = 0.2 µS/cm), and 0.2 weight parts of a 1 weight % aqueous sodium hydroxide solution. This was followed by allowing the solution to stand for 1.5 hours. The silicone rubber powder was then filtered off on filter paper. A slurry of filtered silicone rubber powder, and 100 weight parts pure water (conductivity = 0.2 µS/cm), was again stirred for 1 hour in the homodisperser, and then allowed to stand for 1.5 hours. Filtration of the silicone rubber powder and washing with pure water was subsequently carried out twice, yielding a slurry of the silicone rubber powder. The slurry or silicone rubber powder was dried in an oven at 100 °C to provide silicone rubber powder (C). Silicone rubber powder (C) was evaluated for unpleasant odor generation and its hydrogen ion exponent (pH). The results are reported in Table 1.

### Example 2

10 weight parts of silicone rubber powder (A) prepared in Comparative Example 1 was stirred at room temperature for 1 hour at 3,000 rpm in a homodisperser, with a mixed solution of 5 weight parts ethanol and 50 weight parts of a 2 weight % aqueous sodium citrate solution. This was followed by allowing the solution to stand for 1.5 hours. The silicone rubber powder was then filtered off on filter paper. A slurry of filtered silicone rubber powder, and 100 weight parts pure water (conductivity = 0.2 µS/cm), was again stirred for 1 hour in the homodisperser, and then allowed to stand for 1.5 hours. Filtration of the silicone rubber powder and washing with pure water was subsequently carried out twice, yielding a slurry of silicone rubber powder. The slurry of silicone rubber powder was dried in an oven at 100 °C to provide silicone rubber powder (D). Silicone rubber powder (D) was evaluated for unpleasant odor generation and its hydrogen ion exponent (pH). The results are reported in Table 1.

**Table 1**

| | Comparative Examples | | Present Invention | |
|---|---|---|---|---|
| | Comparative Example 1 | Comparative Example 2 | Example 1 | Example 2 |
| Silicone Rubber Powder | A | B | C | D |
| Presence/Absence of Unpleasant Odor | x | + | + + | + + |
| | Strong Smell of Aldehyde and Acid | Moderate Smell of Aldehyde and Acid | | |
| Hydrogen Ion Exponent (pH) | 4.4 | 5.7 | 6.7 | 7.2 |

As is apparent from Table 1, cured silicone powders according to our invention are inhibited from evolving unpleasant odors with the passage of time, and the method is efficient for preparing such cured silicone powders. Such odorless cured silicone powders are particularly useful in the personal care arena where the presence of odor in consumer products is especially objectionable.

Other variations may be made in compounds, compositions, and methods described herein without departing from the essential features of our invention. The forms of invention are exemplary only and not intended as limitations on their scope as defined in the appended claims.

## Claims

1. A method of preparing a cured silicone powder inhibited from evolving unpleasant odors with the passage of time, comprising treating the surface of a cured silicone powder by dipping the cured silicone powder in an aqueous alkaline solution, and subsequently washing the cured silicone powder with water to remove excess alkali.

2. A method according to Claim 1 wherein the cured silicone powder is prepared by curing a curable silicone composition while the curable silicone composition is dispersed in an aqueous surfactant solution and drying the cured silicone powder, or by simultaneously curing and drying a curable silicone composition while the curable silicone composition is dispersed in an aqueous surfactant solution.

3. A method according to Claim 2 wherein the curable silicone composition is selected from the group consisting of addition reaction-curing silicone compositions, dehydrogenative condensation reaction-curing silicone compositions, alcohol-eliminating condensation reaction-curing silicone compositions, and dehydration condensation reaction-curing silicone compositions.

4. A method according to Claim 2 in which the surfactant is a nonionic surfactant.

5. A method according to Claim 4 in which the surfactant contains a polyoxyethylene chain.

6. A method according to Claim 1 in which the aqueous alkaline solution contains an alkali selected from the group consisting of alkali metal and alkaline-earth metal hydroxides; alkali metal and alkaline-earth metal salts of inorganic acids; ammonia; alkali metal and alkaline-earth metal salts of carboxylic acids; amine compounds; nitrogenous heterocyclic compounds; and mixtures of two or more alkali.

7. A cured silicone powder prepared according to the method defined in Claim 1.

8. A cured silicone powder according to Claim 7 in which the cured silicone powder has a hydrogen ion exponent (pH) in aqueous ethanol solution of 6 to 8.

9. A cured silicone powder according to Claim 8 in which the cured silicone powder is a gel, a rubber, or a hard resin.

## Patentansprüche

1. Verfahren zur Herstellung eines gehärteten Siliconpulvers, bei dem die Entwicklung unangenehmer Gerüche im Verlauf der Zeit unterdrückt wurde, umfassend Behandeln der Oberfläche eines gehärteten Siliconpulvers durch Eintauchen des gehärteten Siliconpulvers in eine wässrige alkalische Lösung und nachfolgend Waschen des gehärteten Siliconpulvers mit Wasser, um überschüssiges Alkali zu entfernen.

2. Verfahren nach Anspruch 1, worin das gehärtete Siliconpulver durch Härten einer härtbaren Siliconzusammensetzung, während die härtbare Siliconzusammensetzung in einer wässrigen Lösung einer oberflächenaktiven Substanz dispergiert ist, und Trocknen des gehärteten Siliconpulvers oder durch gleichzeitiges Härten und Trocknen einer härtbaren Siliconzusammensetzung, während die härtbare Siliconzusammensetzung in einer wässrigen Lösung einer oberflächenaktiven Substanz dispergiert ist, hergestellt wird.

3. Verfahren nach Anspruch 2, worin die härtbare Siliconzusammensetzung ausgewählt ist aus der Gruppe bestehend aus additionsreaktionshärtenden Siliconzusammensetzungen, mit dehydrierender Kondensationsreaktion härtenden Siliconzusammensetzungen, mit alkoholeliminierender Kondensationsreaktion härtenden Siliconzusammensetzungen und mit dehydratisierender Kondensationsreaktion härtenden Siliconzusammensetzungen.

4. Verfahren nach Anspruch 2, in welchem die oberflächenaktive Substanz eine nichtionische oberflächenaktive Substanz ist.

5. Verfahren nach Anspruch 4, in welchem die oberflächenaktive Substanz eine Polyoxyethylenkette enthält.

6. Verfahren nach Anspruch 1, in welchem die wässrige alkalische Lösung eine Lauge, ausgewählt aus der Gruppe bestehend aus Alkalimetall- und Erdalkalimetallhydroxiden; Alkalimetall- und Erdalkalimetallsalzen von anorganischen Säuren; Ammoniak; Alkalimetall- und Erdalkalimetallsalzen von Carbonsäuren; Aminverbindungen; stickstoffhaltigen heterocyclischen Verbindungen und Mischungen von zwei oder mehreren Laugen enthält.

7. Gehärtetes Siliconpulver, das gemäß dem in Anspruch 1 definierten Verfahren hergestellt wurde.

8. Gehärtetes Siliconpulver nach Anspruch 7, in welchem das gehärtete Siliconpulver einen Wasserstoffionexponent (pH) in wässriger Ethanollösung von 6-8 aufweist.

9. Gehärtetes Siliconpulver nach Anspruch 8, in welchem das gehärtete Siliconpulver ein Gel, ein Gummi oder ein hartes Harz ist.

## Revendications

1. Procédé pour préparer une poudre de silicone durcie que l'on empêche de dégager des odeurs désagréables lorsque le temps passe, comprenant le traitement de la surface d'une poudre de silicone durcie en trempant la poudre de silicone durcie dans une solution alcaline aqueuse, et ensuite le lavage de la poudre de silicone durcie avec de l'eau pour enlever l'excès d'alcalin.

2. Procédé selon la revendication 1, dans lequel la poudre de silicone durcie est préparée en réticulant une composition de silicone durcissable tandis que la composition de silicone durcissable est dispersée dans une solution aqueuse de tensioactif et en séchant la poudre de silicone durcie, ou en durcissant et séchant simultanément une composition de silicone durcissable tandis que la composition de silicone durcissable est dispersée dans une solution aqueuse de tensioactif.

3. Procédé selon la revendication 2, dans lequel la composition de silicone durcissable est choisie dans le groupe formé par des compositions de silicone durcie par réaction d'addition, des compositions de silicone durcie par réaction de condensation par déshydrogénation, des compositions de silicone durcie par réaction de condensation avec élimination d'alcool, et des compositions de silicone durcie par réaction de condensation par déshydratation.

4. Procédé selon la revendication 2, dans lequel le tensioactif est un tensioactif non ionique.

5. Procédé selon la revendication 4, dans lequel le tensioactif contient une chaîne de polyoxyéthylène.

6. Procédé selon la revendication 1, dans lequel la solution alcaline aqueuse contient un alcalin choisi dans le groupe formé par des hydroxydes de métal alcalin et de métal alcalino-terreux ; des sels de métal alcalin et de métal alcalino-terreux d'acides minéraux ; d'ammoniac ; des sels de métal alcalin et de métal alcalino-terreux d'acides carboxyliques ; des composés aminés ; des composés hétérocycliques azotés ; et des mélanges de deux alcalins ou davantage.

7. Poudre de silicone durcie préparée selon le procédé défini dans la revendication 1.

8. Poudre de silicone durcie selon la revendication 7 dans laquelle la poudre de silicone durcie a un indice d'ions hydrogène (pH) dans une solution aqueuse d'éthanol de 6 à 8.

9. Poudre de silicone durcie selon la revendication 8 dans laquelle la poudre de silicone durcie est un gel, un caoutchouc ou une résine dure.
